# EUROPÄISCHE PATENTANMELDUNG

(11) **EP 2 269 879 A1**
(43) Veröffentlichungstag der Anmeldung: **05.01.2011**
(21) Anmeldenummer: 10003014.7
(22) Anmeldetag: 22.03.2010
(51) Int. Cl.: B60S 5/06

(54) **Auswechselbarer Energiespeicher für ein Kraftfahrzeug**

(30) Priorität: 22.03.2009 DE 202009003854 U
(71) Anmelder: Vogt, Oliver, 80939 München (DE)
(72) Erfinder: Rudzewski, Stephen, Dr., 80939 München (DE); Vogt, Oliver, 80939 München (DE); Bartulovic, Ivo, 80939 München (DE)

(57) **Zusammenfassung**

Die Erfindung betrifft einen auswechselbaren Energiespeicher für ein Kraftfahrzeug umfassend mindestens einen Energieblock, ein Montagesystem, zur Montage des Energieblocks im Kraftfahrzeug, Versorgungs- und Entsorgungsanschlüsse, zur Versorgung und Entsorgung des Energieblocks mit Versorgungsmitteln, zur Erhöhung der Reichweite automatisiert derart zusammenwirken, dass der Energiespeicher automatisiert aus dem Kraftfahrzeug sowohl ausbaubar, als auch wieder einbaubar ist.

## Beschreibung

Die Erfindung betrifft einen auswechselbaren Energiespeicher für ein Kraftfahrzeug.

Kraftfahrzeuge werden gängigerweise durch kraftstoffbetriebene Motoren angetrieben, wie beispielsweise Benzin- bzw. Dieselmotoren.

Der Nachteil von insbesondere elektrisch angetriebenen Antriebssystemen ist der Umstand, daß die bisher verfügbaren Batterien eine zu geringe Kapazität aufweisen, wirklich längere Strecken fahren zu können.

Ein weiterer Nachteil ist, daß die Batterien nach Ihrer Entladung längere Zeit benötigen, um komplett wieder aufgeladen zu werden.

Das gleiche gilt beispielsweise auch für Brennstoffzellen.

Daher ist es Aufgabe der vorliegenden Erfindung diese Nachteile ein alternatives Antriebskonzept bereitzustellen, welches diese Nachteile nicht aufweist.

Diese Aufgabe wird gelöst durch den unabhängigen Anspruch. Vorteilhafte Ausgestaltungen gehen aus den Unteransprüchen hervor.

Insbesondere wird diese Aufgabe gelöst durch einen auswechselbaren Energiespeicher für ein Kraftfahrzeug umfassend mindestens einen Energieblock, ein Montagesystem, zur Montage des Energieblocks im Kraftfahrzeug, Versorgungs- und Entsorgungsanschlüsse, zur Versorgung und Entsorgung des Energieblocks mit Versorgungsmitteln, die automatisiert derart zusammenwirken, dass der Energiespeicher automatisiert aus dem Kraftfahrzeug sowohl ausbaubar, als auch wieder einbaubar ist.

Derartige Energiespeicher umfassen vorzugsweise Batterien als Stromspeicher und/oder Brennstoffzellen, die einen gasförmigen oder flüssigen Brennstoff in elektrische Energie umwandeln.

Das Montagesystem umfasst einen Rahmen, der sämtliche Versorgungsanschlüsse und ein Fixiersystem sowie einen Auslösemechanismus und Überwachungssensoren. Die Versorgungs- und Entsorgungsanschlüsse umfassen Strom, sowie Kühlmittel. Die Stromversorgung verbindet den Energieblock mit einer Kontrolleinheit die wiederum mit den elektrischen Antriebsmotoren des Fahrzeugs verbunden ist. Das Kühlmittel des Energieblocks gelangt über Rohrleitungen in einen separaten Kühler und kühlt den Energiespeicher.

Das automatisierte zusammenwirken der besagten Komponenten, derart, daß der Energiespeicher automatisiert aus dem Kraftfahrzeug sowohl ausbaubar, als auch wieder einbaubar ist, geschieht mit Hilfe einer Steuerung. Diese Steuerung koordiniert und bewegt den Energieblock, das Montagesystem, das Anschließen der Versorgungs- und Entsorgungsanschlüsse, positioniert diese zeitlich und räumlich zueinander und löst, bzw. arretiert diese zeitlich und räumlich zu- bzw. voneinander.

Der automatisierte Ein- und Ausbau verhilft zu einem sehr schnellen Wechsel derartiger Energiespeicher, insbesondere Antriebsbatterien. Derartige Austauschaktionen, umfassend z.B. genormte Austauschbatterien können entlang der Hauptverkehrsstrecken in Lagern, umfassend einen Auswechselmechanismus angelegt und bereitgehalten und ausgewechselt werden.

Ein derartiger auswechselbarer Energiespeicher für ein Kraftfahrzeug, wobei der Energiespeicher durch eine automatisierte Ausbau- Einbauvorrichtung dem Kraftfahrzeug zu- und abführbar ist, und/oder der Energieblock an dem Kraftfahrzeug automatisiert arretiert wird, und/oder die Versorgungs- und/oder Entsorgungsanschlüsse zwischen Energieblock und Kraftfahrzeug austomatisiert koppelt und/oder entkoppelt werden, bewirkt einen Zugewinn an Sicherheit beim Wechselvorgang. Sowohl das hohe Gewicht als auch die hohen elektrischen Spannung am Energieblock stellen eine eventuelle Gefährdung dar, die ein automatisierter Austauschprozess vermeidet. Nur ein automatisierter Austauschprozess kann den Energieblock schnell und präzise dem KFZ entnehmen und wieder zuführen.

Ein derartiger auswechselbarer Energiespeicher für ein Kraftfahrzeug, wobei die Automatisierung durch eine Steuerungsvorrichtung sichergestellt wird, wobei die Steuerungsvorrichtung einen Speicher umfasst, der eine Ablaufsequenz der Automatisierung umfasst, sowie einen Prozessor, welcher die Ablaufsequenz in Steuersignale umwandelt, sowie Positionier- und Arretiervorrichtungen, welchen die Steuersignale zugeführt werden und welche die Positionierung und/oder Arretierung zwischen Energieblock und Kraftfahrzeug sicherstellt, bewirkt den sicheren und vollständigen Ablauf des Prozesses. Angesichts des großen Gewichts und der hohen elektrischen Spannungen im Energieblock ginge durch einen nicht korrekt ablaufenden Einbauprozess im KFZ große Gefahr für die Insassen aus bzw. könnte es zu schwerwiegenden Beschädigungen des KFZ kommen.

Ein derartiger auswechselbarer Energiespeicher für ein Kraftfahrzeug, wobei außerdem das Montagesystem den Energieblock mit Hilfe einer Führung z.B. in Gestalt einer Schiene und eines Fixiermechanismusses, insbesondere in Gestalt eines Schließmechanismusses im Kraftfahrzeug haltert bewirkt, daß die Führung z.B. in Gestalt einer Schiene eine definierte Halterung bereitstellt und eine Verfahrbewegung, z.B. in Gestalt einer Translationsbewegung zum Auswechseln des Energieblocks ermöglicht.

Die z.B automatisierte Zuführung und Positionierung des Energiespeichers im Kraftfahrzeug kann beispielsweise wie folgt umgesetzt werden:

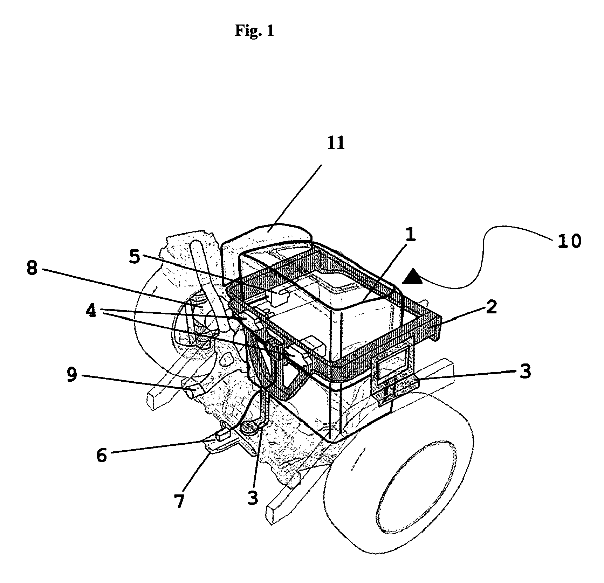

Für den Batteriewechsel befährt das Fahrzeug eine Batteriewechselstation. Sobald das Fahrzeug in dieser Station geparkt wird, wird dieses an einer definierten Angreifstelle (Fig. 1 Nr. 7) mittels eines automischen Greifers fixiert. Diese Fixierung des Fahrzeugs stellt sicher, dass der Energieblock präzise ins Fahrzeug eingefügt werden kann ohne sich dabei zu verkeilen oder Teile der Karosserie zu beschädigen. An dieser Angreifstelle befindet sich auch der mögliche Fernöffnungsmechnismus welcher die Verriegelung des Energiespeichers öffnet. Im nächsten Schritt nimmt eine der Form des Energiespeichers angepasste Aufnahme den Energiespeicher auf und bewegt diesen in die Wechselstation, wo er dann wieder aufgeladen werden kann und nach dem Aufladeprozess z.B. automatisiert einem anderen Fahrzeug zur Verfügung gestellt werden kann

Ein derartiger auswechselbarer Energiespeicher für ein Kraftfahrzeug, wobei außerdem die Halterung mit Hilfe eines Fernöffnungsmechanismus geöffnet und geschlossen wird bewirkt, daß der Energieblock sich nicht aus der Halterung lösen kann.

Der Fernöffnungsmechanismus besitzt vorzugsweise einen Angreifpunkt der von aussen seitens der Wechselstation kontaktiert werden kann. Diese Kontaktierung / Betätigung erfolgt vorzugsweise über eine Dreh- und / oder Drück- und / oder Zug-Bewegung.

Die Übertragung des Ver-/Entriegelungsvorganges an die Halterung des Energiespeichers erfolgt vorzugsweise mechanisch mittels Bowdenzügen und / oder hydraulisch und / oder elektrisch. Entscheidend ist, dass der Fernöffnungsmechanismus ausschließlich nach der Fixierung und Arretierung des KFZ auf der Wechselstation ausgelöst werden kann. Somit wird ein Lösen des Energieblocks während der Fahrt sicher ausgeschlossen, auch kann dieser nicht aus dem KFZ heraus betätigt werden.

Ein derartiger auswechselbarer Energiespeicher für ein Kraftfahrzeug, wobei außerdem der Energiespeicher mit Hilfe eines Adaptermoduls in das Kraftfahrzeug eingebaut wird bewirkt, daß der Energieblock nur eine genormte Größe aufzuweisen braucht und mit Hilfe des Adapeters in Karosserien mit unterschiedlichen Lagerungen bzw. Befestigungsorten aufnehmbar ist.

In derartiger Adapter besteht vorzugsweise aus eine Rahmen, gefertigt z.B. aus verformtem Blech und / oder Strangpressprofilen und / oder Faserverbundwerkstoffen. Er ist vorzugsweise kraftschlüssig mit tragenden Teilen des Fahrzeugs, wie beispielsweise den Längsträgern verbunden und überträgt in jedem Fall die wesentlichen Kräfte zwischen dem Energieblock und der Karosserie.

Ein derartiger Adapter kann entweder als Ganzes oder aus Einzelteilen in das Fahrzeug eingebaut werden. Seine Form kann für jedes Fahrzeug individuell angepasst werden. Der Rahmen wird hierfür an diversen Punkten, vorzugsweise 3 Punkten, mit dem Fahrzeug verbunden.

Vorzugsweise trägt der Adapter alle Verschließmechanismen sowie die Zuführungen für die Energieversorgung sowie die Kühlmittelversorgung. Im Crash-Fall schränkt der Rahmen die Bewegungsfreiheit des Energieblocks ein und nimmt durch eigene Verformung zusätzliche kinetische Energie auf.

Ein derartiger auswechselbarer Energiespeicher für ein Kraftfahrzeug, wobei außerdem der Energiespeicher eine Angreifmöglichkeit durch einen Angreifer umfasst, mit deren Hilfe er automatisiert ausgewechselt werden kann bewirkt, daß diese Angreifmöglichkeit einen definierten Ort darstellt, mit dessen Hilfe der Energieblock sicher bewegt werden kann.

Dieser Angreifer ist vorzugsweise ein Teil der Wechselstation und umfasst und / oder berührt den Energieblock z.B. auf der Unterseite vorzugswese derart, daß eine kraftschlüssige Verbindung zwischen beiden zustande kommt. Sobald die Verschließmechanismen zwischen Adapter und Energieblock am Adapterrahmen geöffnet werden, wird der Energieblock mittels des Angreifers vorzugsweise in Fahrzeuglängsrichtung bewegt. Es wird hierbei vorzugsweise in den Führungen des Adapterahmens ein weiterer Verfahrweg von z.B. einigen Zentimetern vorgehalten, um das unmittelbare Lösen des Energieblockes nach dem Entriegelungsvorgang zu verhindern. Sobald dieser Verfahrweg endet gleitet der Energieblock - durch den Angreifer gehalten vertikal in die Wechselstation. Der Beladevorgang erfolgt in umgekehrter Reihenfolge.

Ein derartiger auswechselbarer Energiespeicher für ein Kraftfahrzeug, wobei außerdem der Energiespeicher eine vergrößerte Oberfläche aufweist, um eine zusätzliche Kühlwirkung bereitzustellen bewirkt, daß die beim Betrieb des Energieblocks auftretende Abwärme verbessert abgeführt werden kann.

Solche Eigenschaften werden in der Regel durch die Oberfläche vergrößernden Strukturen und / oder Kühlkanäle und / oder besonders wärmeleitende Werkstoffe erreicht. Die optimale Position dieser kühlenden Elemente auf dem Energieblock richtet sich nach der Anströmbarkeit bei der Fahrt, also wahrscheinlich auf der Vorderseite des Energieblocks in Fahrtrichtung.

Ein derartiger auswechselbarer Energiespeicher für ein Kraftfahrzeug, wobei außerdem der Energiespeicher mit Hilfe von Führungsmitteln mehrdimensional definiert positionierbar ist bewirkt, daß der Energieblock in alle Richtungen fest fixiert eingebaut ist und nicht wackeln kann.

Die Führungsmittel zwischen Energiespeicher und Fahrzeug werden hierbei derart ausgelegt, dass beim Wechsel des Energiespeichers dieser sich nicht verklemmen und / oder verkeilen kann. Hierfür trägt der Energiespeicher beispielsweise seitlich jeweils einen Bolzen. Auf Seiten des Rahmens befindet sich z.B. eine vorzugsweise L-förmige Schiene. Beim hierdurch möglichen Einschieben des Energiespeichers z.B. von unten in das Fahrzeug wird dann die Vertikalbewegung solange ausgeführt, bis seine Haltebolzen auf beiden Seiten oben an die Schiene stoßen. Dort verortete Sensoren melden dies dann an die Steuerungseinheit, die wiederum mit der Austauschstation kommuniziert. In Folge wird dann eine z.B. Lateralbewegung ausgeführt und zwar so lange, bis die Bolzen an den hinteren Anschlag der Führungsschienen stoßen, was wiederum durch Sensoren erfasst wird. Im darauffolgenden Schritt kann die Verriegelung dann geschlossen werden.

Ein derartiger auswechselbarer Energiespeicher für ein Kraftfahrzeug, wobei außerdem der Energiespeicher von etwa 40KG bis zu etwa 400KG Gewicht aufweist, und / oder um die 100 Volt bis etwa 600 Volt oder alternativ bis etwa 1000 Volt Spannung aufweist und / oder bis zu 60KWh bzw. bis zu 100KWh bereitstellt bewirkt eine Abgrenzung zur bekannten Autobatterie, wobei der Fachmann das Grundprinzip auch im Zuge künftiger Entwicklungen anwenden würde, oder im Fall, daß das geschilderte Prinzip bei LKW, bzw. Schiffen etc. Anwendung findet.

Die Erfindung wird darüber hinaus ebenfalls gelöst durch ein Antriebsmodul, umfassend mindestens einen erfindungsgemäßen auswechselbaren Energiespeicher für ein Kraftfahrzeug nach einem der zuvor genannten Ansprüche, mindestens einen elektrischen Radantrieb, wobei der elektrische Radantrieb mindestes einen Elektroantrieb zum Betreiben des Rads umfasst, und / oder ein Steuerungsmodul zum Informationsaustausch mit der Bordelektrik / Elektronik.

Dies bewirkt, daß der erfindungsgemäße Energiespeicher Teil eines voll umfänglich elektrisch angetriebenen Fahrzeugs ist, also eines Fahrzeugs bei welchem auch der Antrieb elektrisch mit Hilfe eines Elektromotors erfolgt, wie beispielsweise mit Hilfe von Radnabenmotoren.

Als Antrieb kommen insbesondere die bekannten Standardkomponenten in Betracht, wie z.B. ein Radnabenmotor.

Ein derartiges Antriebsmodul umfassend mindestens ein Adapterstück, zum Einbau des Antriebsmoduls in eine bereits bestehende Fahrzeugstruktur bewirkt, daß ein genormtes Antriebsmodul in unterschiedliche Karosserien eingebaut werden kann und an den dort vorhandenen Lagerungen bzw. Anschlussstellen befestigt werden kann.

Als Antrieb kann entweder besagter Radnabenmotor dienen, oder z.B. ein E-Motor an ganz anderer Stelle des Fahrzeugs

Ein derartiges Antriebsmodul, wobei das Antriebsmodul außerdem den Antriebsstrang eines Kraftfahrzeugs ersetzt oder ergänzt bewirkt, daß der gesamte Antriebstrang eines Standardfahrzeugs durch ein erfindungsgemäßes Antriebsmodul ersetzt oder ergänzt werden kann. Dies gilt, wie alle weiteren Ausführungsformen, auch für Hybridfahrzeuge.

Die Erfindung wird darüber hinaus ebenfalls gelöst durch einen Auswechselmechanismus für einen auswechselbaren Energiespeicher eines Kraftfahrzeugs nach einem der zuvor genannten Ansprüche, umfassend eine Angreifstelle zum Lösen des Energieblocks.

Diese Angreifstelle, kann beispielsweise auf der Fahrzeugunterseite am Vorderachsträger fixiert sein.

Der Auswechselmechanismus umfasst einerseits die Verriegelung des Energiespeichers, sowie die Zuführmechanik und die Beschickung von neuen und den Abtransport der alten Energiespeicher.

Ein derartiger Auswechselmechanismus für einen auswechselbaren Energiespeicher eines Kraftfahrzeugs, wobei die Angreifstelle die Eichstelle der Interaktion zwischen Auswechselmechanismus und Kraftfahrzeug darstellt bewirkt, daß hierdurch ein fester Bezugspunkt zwischen einem beliebigen KFZ und dem Auswechselmechanismus geschaffen ist.

Diese Eichstelle ist so markant gestaltet, dass der Angreifer der Wechselstation die Lage und Position z.B. mit in das Steuerungssystem als Messmittel eingegliederte Video und / oder Lasererkennung erkennen kann. Die Oberfläche der Eichstelle bietet vorzugsweise für den Angreife der Wechselstation optimale Angreif- und Fixationspunkte.

Ein derartiger Auswechselmechanismus für einen auswechselbaren Energiespeicher eines Kraftfahrzeugs, wobei der Auswechselmechanismus das Kraftfahrzeug mit Hilfe der Angreifstelle haltert bewirkt, daß das Kraftfahrzeug bei der Entnahme des Energiespeichers keine unkontollierten relativen Bewegungen und insbesondere keine vertikalen Bewegungen ausführt.

Ein derartiger Auswechselmechanismus für einen auswechselbaren Energiespeicher eines Kraftfahrzeugs, umfassend einen Verriegelungsmechanismus für den Energieblock bewirkt, daß alle Verbindungen zwischen Adapter und Energiespeicher nach Bedarf ent-/verriegelt werden können.

Ein derartiger Auswechselmechanismus für einen auswechselbaren Energiespeicher eines Kraftfahrzeugs, umfassend eine Aufnahmevorrichtung für den Energieblock bewirkt, daß der Energieblock nach dem Lösen durch eine Vorrichtung aufgenommen werden kann.

Ein derartiger Auswechselmechanismus für einen auswechselbaren Energiespeicher eines Kraftfahrzeugs, wobei das Lösen des Energieblocks, die Aufnahme des Energieblocks auf der Aufnahmevorrichtung und der Austausch des aufgenommenen Energieblocks durch einen Ersatzenergieblock, sowie der Einbau des Ersatzenergieblocks in die Halterung des Kraftfahrzeugs automatisiert abläuft bewirkt im übertragenden Sinne einen elektrischen Tankvorgang mit Hilfe des Austauschs des Energieblocks. Dieser kann in einer entsprechenden Ladestation die hierfür benötigte Zeit geladen werden und dann auf die beschriebene Weise in ein anderes Kraftfahrzeug auf die beschriebene Weise eingebaut werden

Ein Verfahren zum Betätigen eines derartigen Auswechselmechanismusses umfasst automatisiert die Schritte, Positionieren des Kraftfahrzeugs am Auswechselmechanismus, Befestigung des Auswechselmechanismus am Adapterstück, Lösen der Halterungen, automatischer Ausbau des Energieblocks, Aufnahme des Energieblocks, Austausch des (teil)entladenen Energieblocks durch einen aufgeladenen Energieblock, Einbau des aufgeladenen bzw. teilaufgeladenen Energieblocks, Schließen der Halterungen, Lösen vom Adapterstück, entfernen des Fahrzeugs vom Auswechselmechanismus.

Die Aufgabe wird weiterhin gelöst durch eine Austauschstation, umfassend eine Abstellmöglichkeit für Kraftfahrzeuge, einen Auswechselmechanismus nach einem der zuvor genannten Ansprüche, eine Vorrichtung zur Zu- und Abführung von Energiespeichern wie zuvor beschrieben und/oder eine automatisierte Ausbau-Einbauvorrichtung für den Energiespeicher in dem Kraftfahrzeug wie zuvor beschrieben, und/oder eine Steuerungsvorrichtung nach einem der zuvor genannten Ansprüche.

Eine derartige Austauschstation umfasst fakultativ eine durch die Steuervorrichtung automatisierte Zuführung von Energiespeichern und oder eine automatisierte Ausrichtung des Kraftfahrzeugs zu der Zuführung von Energiespeichern.

Eine derartige Austauschstation umfasst fakultativ weiterhin eine Zustandsüberwachung der ein- und ausgebauten Energiespeicher sowie eine Sicherheitsabschaltung der in der Austauschstation befindlichen Fahrzeuge.

Weiterhin umfasst eine derartige Austauschstation eine Einrichtung zur Reinigung von, mindestens der Angreifstelle und den ein-/ausgebauten Energiespeichern.

Weiterhin umfasst eine derartige Austauschstation Sicherheitseinrichtungen gegen z.B. Brände in Form von z.B. Sensoren, automatischen Feuerlöscheinrichtungen, Brandschutztüren etc.

Die Aufgabe wird weiterhin gelöst durch ein Verfahren zum Auswechseln von Energiespeichern in einem Kraftfahrzeug, umfassend ein Kraftfahrzeug mit einem Energiespeicher, eine Ab- und/oder Zuführung von Energiespeichern, eine Ausrichtvorrichtung zum Ausrichten von Kraftfahrzeugen zur Zuführvorrichtung, eine automatisierte Ausbau- Einbauvorrichtung zum zu- und abführen des Energiespeichers, **dadurch gekennzeichnet, daß** das Kraftfahrzeug mit Hilfe der Ausrichtvorrichtung relativ zur Zuführung von Energiespeichern definiert ausgerichtet wird und in einem weiteren Schritt nach der Ausrichtung der im Fahrzeug befindliche Energiespeicher durch die Ausbau- Einbauvorrichtung ausgebaut und abgeführt wird und in einem weiteren Schritt der neue Energiespeicher automatisiert zugeführt und in einem weiteren Schritt automatisch verriegelt wird.

Weitere Ausgestaltungen gehen aus den Fig. Hervor. Hierbei zeigen die:
- Fig 1.: einen erfindungsgemäßen auswechselbaren Energiespeicher 1
- Fig 2.: einen erfindungsgemäßen auswechselbaren Energiespeicher 1 in Seitenansicht beim Wechselvorgang.

Insbesondere zeigt die Fig 1. einen erfindungsgemäßen auswechselbaren Energiespeicher 1 für ein Kraftfahrzeug, hier in Gestalt einer Batterie umfassend mindestens einen Energieblock, ein Montagesystem 3, zur Montage des Energieblocks 1 im Kraftfahrzeug, Versorgungs- und Entsorgungsanschlüsse 4, hier in Gestalt von Strom rechts und Kühlmittel links, zur Versorgung und Entsorgung des Energieblocks mit Versorgungsmitteln.

Der Energieblock wird mit Hilfe des Riegels 5 im Rahmen 2 gehaltert und mit Hilfe des Fernöffnungsmechanismus 6 an der Angreifstelle 7 bei Bedarf geöffnet.

Das Antriebsmodul 10 umfasst neben der Batterie 1 darüber hinaus den elektrischen Radantrieb 8 und den Adapter zur Montage des elektrischen Radantriebs 9.

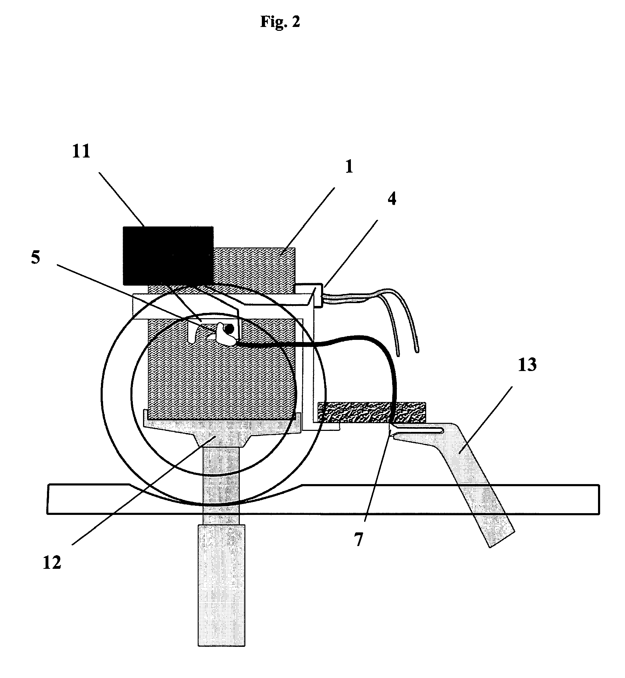

Insbesondere zeigt die Fig 2 einen erfindungsgemäßen auswechselbaren Energiespeicher 1, eine Zuführeinrichtung 12 die an dem Energiespeicher 1 angreift, eine Ausrichtvorrichtung 13 die an der Angreifstelle 7 angreift.

Der Energieblock wird mit Hilfe des Riegels 5 im Rahmen 2 gehaltert und mit Hilfe des Fernöffnungsmechanismus 6 an der Angreifstelle 7 bei Bedarf geöffnet.

### Bezugszeichenliste:

**1 Energiespeicher**
**2 Rahmen**
**3 Montagesystem**
**4 Versorgungs- und Entsorgungsanschlüsse**
**5 Verriegelungsmechanismus**
**6 Fernöffnungsmechanismus**
**7 Angreifstelle**
**8 elektrischer Radantrieb**
**9 Adapter für elektrischen Radantrieb**
**10 Antriebsmodul**
**11 Steuergerät**
**12 Zuführvorrichtung**
**13 Ausrichtvorrichtung**

## Patentansprüche

1. Auswechselbarer Energiespeicher für ein Kraftfahrzeug umfassend mindestens einen Energieblock, ein Montagesystem, zur Montage des Energieblocks im Kraftfahrzeug, Versorgungs- und Entsorgungsanschlüsse, zur Versorgung und Entsorgung des Energieblocks mit Versorgungsmitteln, die automatisiert derart zusammenwirken, dass der Energiespeicher automatisiert aus dem Kraftfahrzeug sowohl ausbaubar, als auch wieder einbaubar ist.

2. Auswechselbarer Energiespeicher für ein Kraftfahrzeug nach Anspruch 1 wobei der Energiespeicher durch eine automatisierte Ausbau- Einbauvorrichtung dem Kraftfahrzeug zu- und abführbar ist, und/oder der Energieblock an dem Kraftfahrzeug automatisiert arretiert wird, und/oder die Versorgungs- und/oder Entsorgungsanschlüsse zwischen Energieblock und Kraftfahrzeug austomatisiert koppelt und/oder entkoppelt.

3. Auswechselbarer Energiespeicher für ein Kraftfahrzeug nach einem der zuvor genannten Ansprüche, wobei die Automatisierung durch eine Steuerungsvorrichtung sichergestellt wird, wobei die Steuerungsvorrichtung einen Speicher umfasst, der eine Ablaufsequenz der Automatisierung umfasst, sowie einen Prozessor, welcher die Ablaufsequenz in Steuersignale umwandelt, sowie Positionier- und Arretiervorrichtungen, welchen die Steuersignale zugeführt werden und welche die Positionierung und/oder Arretierung zwischen Energieblock und Kraftfahrzeug sicherstellt.

4. Auswechselbarer Energiespeicher für ein Kraftfahrzeug nach einem der zuvor genannten Ansprüche wobei das Montagesystem den Energieblock mit Hilfe einer Führung z.B. in Gestalt einer Schiene und eines Fixiermechanismusses, im Kraftfahrzeug haltert.

5. Auswechselbarer Energiespeicher für ein Kraftfahrzeug nach einem der zuvor genannten Ansprüche, wobei die Halterung mit Hilfe eines Fernöffnungsmechanismus geöffnet und geschlossen wird.

6. Auswechselbarer Energiespeicher für ein Kraftfahrzeug nach einem der zuvor genannten Ansprüche, wobei der Energiespeicher mit Hilfe eines Adaptermoduls in das Kraftfahrzeug eingebaut wird.

7. Auswechselbarer Energiespeicher für ein Kraftfahrzeug nach einem der zuvor genannten Ansprüche, wobei der Energiespeicher eine Angreifmöglichkeit umfasst, mit deren Hilfe er automatisiert ausgewechselt werden kann.

8. Auswechselbarer Energiespeicher für ein Kraftfahrzeug nach einem der zuvor genannten Ansprüche, wobei der Energiespeicher mit Hilfe von Führungsmitteln mehrdimensional definiert positionierbar ist.

9. Auswechselbarer Energiespeicher für ein Kraftfahrzeug, wobei der Energiespeicher von etwa 40KG bis zu etwa 400KG Gewicht aufweist, und / oder um die 100 Volt bis etwa 600 Volt bzw. bis zu 1000 Volt Spannung aufweist und / oder bis zu 100 KWh bereitstellt.

10. Auswechselmechanismus für einen auswechselbaren Energiespeicher eines Kraftfahrzeugs nach einem der zuvor genannten Ansprüche, umfassend eine Angreifstelle zum Lösen des Energieblocks.

11. Auswechselmechanismus für einen auswechselbaren Energiespeicher eines Kraftfahrzeugs Anspruch 10, wobei die Angreifstelle die Eichstelle der Interaktion zwischen Auswechselmechanismus und Kraftfahrzeug darstellt.

12. Auswechselmechanismus für einen auswechselbaren Energiespeicher eines Kraftfahrzeugs nach einem der Ansprüche 10 oder 11, wobei der Auswechselmechanismus das Kraftfahrzeug mit Hilfe der Angreifstelle haltert.

13. Auswechselmechanismus für einen auswechselbaren Energiespeicher eines Kraftfahrzeugs nach einem der zuvor genannten Ansprüche, wobei das Lösen des Energieblocks, die Aufnahme des Energieblocks auf der Aufnahmevorrichtung und der Austausch des aufgenommenen Energieblocks durch einen Ersatzenergieblock, sowie der Einbau des Ersatzenergieblocks in die Halterung des Kraftfahrzeugs automatisiert abläuft.

14. Austauschstation, umfassend eine Abstellmöglichkeit für Kraftfahrzeuge, einen Auswechselmechanismus nach einem der zuvor genannten Ansprüche, eine Vorrichtung zur Zu- und Abführung von Energiespeichern nach einem der zuvor genannten Ansprüche und/oder eine automatisierte Ausbau-Einbauvorrichtung für den Energiespeicher in dem Kraftfahrzeug nach einem der zuvor genannten Ansprüche, und/oder eine Steuerungsvorrichtung nach einem der zuvor genannten Ansprüche.

15. Verfahren zum Auswechseln von Energiespeichern in einem Kraftfahrzeug, umfassend ein Kraftfahrzeug mit einem Energiespeicher, eine Ab- und/oder Zuführung von Energiespeichern, eine Ausrichtvorrichtung zum Ausrichten von Kraftfahrzeugen zur Zuführvorrichtung, eine automatisierte Ausbau- Einbauvorrichtung zum zu- und abführen des Energiespeichers, **dadurch gekennzeichnet, daß** das Kraftfahrzeug mit Hilfe der Ausrichtvorrichtung relativ zur Zuführung von Energiespeichern definiert ausgerichtet wird und in einem weiteren Schritt nach der Ausrichtung der im Fahrzeug befindliche Energiespeicher durch die Ausbau- Einbauvorrichtung ausgebaut und abgeführt wird und in einem weiteren Schritt der neue Energiespeicher automatisiert zugeführt und in einem weiteren Schritt automatisch verriegelt wird.

## Geänderte Patentansprüche

### Geänderte Patentansprüche gemäss Regel 137(2) EPÜ.

**1.** Auswechselbarer Energiespeicher für ein Kraftfahrzeug umfassend einen einzigen Energieblock, ein Montagesystem, zur Montage des Energieblocks im Kraftfahrzeug, Versorgungs- und Entsorgungsanschlüsse, zur Versorgung und Entsorgung des Energieblocks mit Versorgungsmitteln, die automatisiert derart zusammenwirken, dass der Energiespeicher automatisiert aus dem Kraftfahrzeug sowohl ausbaubar, als auch wieder einbaubar ist, wobei die Automatisierung durch eine Steuerungsvorrichtung sichergestellt wird.

**2.** Auswechselbarer Energiespeicher für ein Kraftfahrzeug nach Anspruch 1 wobei der Energiespeicher durch eine automatisierte Ausbau- Einbauvorrichtung dem Kraftfahrzeug zu- und abführbar ist, und/oder der Energieblock an dem Kraftfahrzeug automatisiert arretiert wird, und/oder die Versorgungs- und/oder Entsorgungsanschlüsse zwischen Energieblock und Kraftfahrzeug austomatisiert koppelt und/oder entkoppelt.

**3.** Auswechselbarer Energiespeicher für ein Kraftfahrzeug nach einem der zuvor genannten Ansprüche, wobei die Automatisierung durch eine Steuerungsvorrichtung sichergestellt wird, wobei die Steuerungsvorrichtung einen Speicher umfasst, der eine Ablaufsequenz der Automatisierung umfasst, sowie einen Prozessor, welcher die Ablaufsequenz in Steuersignale umwandelt, sowie Positionier- und Arretiervorrichtungen, welchen die Steuersignale zugeführt werden und welche die Positionierung und/oder Arretierung zwischen Energieblock und Kraftfahrzeug sicherstellt.

**4.** Auswechselbarer Energiespeicher für ein Kraftfahrzeug nach einem der zuvor genannten Ansprüche wobei das Montagesystem den Energieblock mit Hilfe einer Führung z.B. in Gestalt einer Schiene und eines Fixiermechanismusses, im Kraftfahrzeug haltert.

**5.** Auswechselbarer Energiespeicher für ein Kraftfahrzeug nach einem der zuvor genannten Ansprüche, wobei die Halterung mit Hilfe eines Femöffhungsmechanismus geöffnet und geschlossen wird.

**6.** Auswechselbarer Energiespeicher für ein Kraftfahrzeug nach einem der zuvor genannten Ansprüche, wobei der Energiespeicher mit Hilfe eines Adaptermoduls in das Kraftfahrzeug eingebaut wird.

**7.** Auswechselbarer Energiespeicher für ein Kraftfahrzeug nach einem der zuvor genannten Ansprüche, wobei der Energiespeicher eine Angreifmöglichkeit umfasst, mit deren Hilfe er automatisiert ausgewechselt werden kann.

**8.** Auswechselbarer Energiespeicher für ein Kraftfahrzeug nach einem der zuvor genannten Ansprüche, wobei der Energiespeicher mit Hilfe von Führungsmitteln mehrdimensional definiert positionierbar ist.

**9.** Auswechselbarer Energiespeicher für ein Kraftfahrzeug, wobei der Energiespeicher von etwa 40KG bis zu etwa 400KG Gewicht aufweist, und / oder um die 100 Volt bis etwa 600 Volt bzw. bis zu 1000 Volt Spannung aufweist und / oder bis zu 100 KWh bereitstellt.

**10.** Auswechselmechanismus für einen auswechselbaren Energiespeicher eines Kraftfahrzeugs nach einem der zuvor genannten Ansprüche, umfassend eine Angreifstelle zum Lösen des Energieblocks.

**11.** Auswechselmechanismus für einen auswechselbaren Energiespeicher eines Kraftfahrzeugs Anspruch 10, wobei die Angreifstelle die Eichstelle der Interaktion zwischen Auswechselmechanismus und Kraftfahrzeug darstellt.

**12.** Auswechselmechanismus für einen auswechselbaren Energiespeicher eines Kraftfahrzeugs nach einem der Ansprüche 10 oder 11, wobei der Auswechselmechanismus das Kraftfahrzeug mit Hilfe der Angreifstelle haltert.

**13.** Auswechselmechanismus für einen auswechselbaren Energiespeicher eines Kraftfahrzeugs nach einem der zuvor genannten Ansprüche, wobei das Lösen des Energieblocks, die Aufnahme des Energieblocks auf der Aufnahmevorrichtung und der Austausch des aufgenommenen Energieblocks durch einen Ersatzenergieblock, sowie der Einbau des Ersatzenergieblocks in die Halterung des Kraftfahrzeugs automatisiert abläuft.

**14.** Austauschstation, umfassend eine Abstellmöglichkeit für Kraftfahrzeuge, einen Auswechselmechanismus nach einem der zuvor genannten Ansprüche, eine Vorrichtung zur Zu- und Abführung von Energiespeichern nach einem der zuvor genannten Ansprüche und/oder eine automatisierte Ausbau- Einbauvorrichtung für den Energiespeicher in dem Kraftfahrzeug nach einem der zuvor genannten Ansprüche, und/oder eine Steuerungsvorrichtung nach einem der zuvor genannten Ansprüche.

**15.** Verfahren zum Auswechseln von Energiespeichern in einem Kraftfahrzeug, umfassend ein Kraftfahrzeug mit einem einzigen Energiespeicher, eine Ab- und/oder Zuführung von Energiespeichern, eine Ausrichtvorrichtung zum Ausrichten von Kraftfahrzeugen zur Zuführvorrichtung, eine automatisierte Ausbau-Einbauvorrichtung zum zu- und abführen des Energiespeichers, **dadurch gekennzeichnet, daß** das Kraftfahrzeug mit Hilfe der Ausrichtvorrichtung relativ zur Zuführung von Energiespeichern definiert ausgerichtet wird und in einem weiteren Schritt nach der Ausrichtung der im Fahrzeug befindliche Energiespeicher durch die Ausbau- Einbauvorrichtung ausgebaut und abgeführt wird und in einem weiteren Schritt der neue Energiespeicher automatisiert zugeführt und in einem weiteren Schritt automatisch verriegelt wird, wobei die Automatisierung durch eine Steuerungsvorrichtung sichergestellt wird.

**1.** Auswechselbarer Energiespeicher für ein Kraftfahrzeug umfassend einen einzigen Energieblock, ein Montagesystem, zur Montage des Energieblocks im Kraftfahrzeug, Versorgungs- und Entsorgungsanschlüsse, zur Versorgung und Entsorgung des Energieblocks mit Versorgungsmitteln, die automatisiert derart zusammenwirken, dass der Energiespeicher automatisiert aus dem Kraftfahrzeug sowohl ausbaubar, als auch wieder einbaubar ist, wobei die Automatisierung durch eine Steuerungsvorrichtung sichergestellt wird.

**2.** Auswechselbarer Energiespeicher für ein Kraftfahrzeug nach Anspruch 1 wobei der Energiespeicher durch eine automatisierte Ausbau- Einbauvorrichtung dem Kraftfahrzeug zu- und abführbar ist, und/oder der Energieblock an dem Kraftfahrzeug automatisiert arretiert wird, und/oder die Versorgungs- und/oder Entsorgungsanschlüsse zwischen Energieblock und Kraftfahrzeug austomatisiert koppelt und/oder entkoppelt.

**3.** Auswechselbarer Energiespeicher für ein Kraftfahrzeug nach einem der zuvor genannten Ansprüche, wobei die Automatisierung durch eine Steuerungsvorrichtung sichergestellt wird, wobei die Steuerungsvorrichtung einen Speicher umfasst, der eine Ablaufsequenz der Automatisierung umfasst, sowie einen Prozessor, welcher die Ablaufsequenz in Steuersignale umwandelt, sowie Positionier- und Arretiervorrichtungen, welchen die Steuersignale zugeführt werden und welche die Positionierung und/oder Arretierung zwischen Energieblock und Kraftfahrzeug sicherstellt und wobei die Steuerungsvorrichtung im Fahrzeug verbaut ist.

**4.** Auswechselbarer Energiespeicher für ein Kraftfahrzeug nach einem der zuvor genannten Ansprüche wobei das Montagesystem den Energieblock mit Hilfe einer Führung z.B. in Gestalt einer Schiene und eines Fixiermechanismusses, im Kraftfahrzeug haltert.

**5.** Auswechselbarer Energiespeicher für ein Kraftfahrzeug nach einem der zuvor genannten Ansprüche, wobei die Halterung mit Hilfe eines Fernöffnungsmechanismus geöffnet und geschlossen wird.

**6.** Auswechselbarer Energiespeicher für ein Kraftfahrzeug nach einem der zuvor genannten Ansprüche, wobei der Energiespeicher mit Hilfe eines Adaptermoduls in das Kraftfahrzeug eingebaut wird.

**7.** Auswechselbarer Energiespeicher für ein Kraftfahrzeug nach einem der zuvor genannten Ansprüche, wobei der Energiespeicher eine Angreifmöglichkeit umfasst, mit deren Hilfe er automatisiert ausgewechselt werden kann.

**8.** Auswechselbarer Energiespeicher für ein Kraftfahrzeug nach einem der zuvor genannten Ansprüche, wobei der Energiespeicher mit Hilfe von Führungsmitteln mehrdimensional definiert positionierbar ist.

**9.** Auswechselbarer Energiespeicher für ein Kraftfahrzeug, wobei der Energiespeicher von etwa 40KG bis zu etwa 400KG Gewicht aufweist, und / oder um die 100 Volt bis etwa 600 Volt bzw. bis zu 1000 Volt Spannung aufweist und / oder bis zu 100 KWh bereitstellt.

**10.** Auswechselmechanismus für einen auswechselbaren Energiespeicher eines Kraftfahrzeugs nach einem der zuvor genannten Ansprüche, umfassend eine Angreifstelle zum Lösen des Energieblocks.

**11.** Auswechselmechanismus für einen auswechselbaren Energiespeicher eines Kraftfahrzeugs Anspruch 10, wobei die Angreifstelle die Eichstelle der Interaktion zwischen Auswechselmechanismus und Kraftfahrzeug darstellt.

**12.** Auswechselmechanismus für einen auswechselbaren Energiespeicher eines Kraftfahrzeugs nach einem der Ansprüche 10 oder 11, wobei der Auswechselmechanismus das Kraftfahrzeug mit Hilfe der Angreifstelle haltert.

**13.** Auswechselmechanismus für einen auswechselbaren Energiespeicher eines Kraftfahrzeugs nach einem der zuvor genannten Ansprüche, wobei das Lösen des Energieblocks, die Aufnahme des Energieblocks auf der Aufnahmevorrichtung und der Austausch des aufgenommenen Energieblocks durch einen Ersatzenergieblock, sowie der Einbau des Ersatzenergieblocks in die Halterung des Kraftfahrzeugs automatisiert abläuft.

**14.** Austauschstation, umfassend eine Abstellmöglichkeit für Kraftfahrzeuge, einen Auswechselmechanismus nach einem der zuvor genannten Ansprüche, eine Vorrichtung zur Zu- und Abführung von Energiespeichern nach einem der zuvor genannten Ansprüche und/oder eine automatisierte Ausbau- Einbauvorrichtung für den Energiespeicher in dem Kraftfahrzeug nach einem der zuvor genannten Ansprüche, und/oder eine Steuerungsvorrichtung nach einem der zuvor genannten Ansprüche.

**15.** Verfahren zum Auswechseln von Energiespeichern in einem Kraftfahrzeug, umfassend ein Kraftfahrzeug mit einem einzigen Energiespeicher, eine Ab- und/oder Zuführung von Energiespeichern, eine Ausrichtvorrichtung zum Ausrichten von Kraftfahrzeugen zur Zuführvorrichtung, eine automatisierte Ausbau-Einbauvorrichtung zum zu- und abführen des Energiespeichers, **dadurch gekennzeichnet, daß** das Kraftfahrzeug mit Hilfe der Ausrichtvorrichtung relativ zur Zuführung von Energiespeichern definiert ausgerichtet wird und in einem weiteren Schritt nach der Ausrichtung der im Fahrzeug befindliche Energiespeicher durch die Ausbau- Einbauvorrichtung ausgebaut und abgeführt wird und in einem weiteren Schritt der neue Energiespeicher automatisiert zugeführt und in einem weiteren Schritt automatisch verriegelt wird, wobei die Automatisierung durch eine Steuerungsvorrichtung sichergestellt wird.

**1.** Auswechselbarer Energiespeicher für ein Kraftfahrzeug umfassend einen einzigen Energieblock, ein Montagesystem, zur Montage des Energieblocks im Kraftfahrzeug, Versorgungs- und Entsorgungsanschlüsse, zur Versorgung und Entsorgung des Energieblocks mit Versorgungsmitteln, die automatisiert derart zusammenwirken, dass der Energiespeicher automatisiert aus dem Kraftfahrzeug sowohl ausbaubar, als auch wieder einbaubar ist, wobei die Automatisierung durch eine Steuerungsvorrichtung sichergestellt wird.

**2.** Auswechselbarer Energiespeicher für ein Kraftfahrzeug nach Anspruch 1 wobei der Energiespeicher durch eine automatisierte Ausbau- Einbauvorrichtung dem Kraftfahrzeug zu- und abführbar ist, und/oder der Energieblock an dem Kraftfahrzeug automatisiert arretiert wird, und/oder die Versorgungs- und/oder Entsorgungsanschlüsse zwischen Energieblock und Kraftfahrzeug austomatisiert koppelt und/oder entkoppelt.

**3.** Auswechselbarer Energiespeicher für ein Kraftfahrzeug nach einem der zuvor genannten Ansprüche, wobei die Automatisierung durch eine Steuerungsvorrichtung sichergestellt wird, wobei die Steuerungsvorrichtung einen Speicher umfasst, der eine Ablaufsequenz der Automatisierung umfasst, sowie einen Prozessor, welcher die Ablaufsequenz in Steuersignale umwandelt, sowie Positionier- und Arretiervorrichtungen, welchen die Steuersignale zugeführt werden und welche die Positionierung und/oder Arretierung zwischen Energieblock und Kraftfahrzeug sicherstellt und wobei die Steuerungsvorrichtung im Fahrzeug verbaut ist.

**4.** Auswechselbarer Energiespeicher für ein Kraftfahrzeug nach einem der zuvor genannten Ansprüche wobei das Montagesystem den Energieblock mit Hilfe einer Führung z.B. in Gestalt einer Schiene und eines Fixiermechanismusses, im Kraftfahrzeug haltert.

**5.** Auswechselbarer Energiespeicher für ein Kraftfahrzeug nach einem der zuvor genannten Ansprüche, wobei die Halterung mit Hilfe eines Fernöffnungsmechanismus geöffnet und geschlossen wird.

**6.** Auswechselbarer Energiespeicher für ein Kraftfahrzeug nach einem der zuvor genannten Ansprüche, wobei der Energiespeicher mit Hilfe eines Adaptermoduls in das Kraftfahrzeug eingebaut wird.

**7.** Auswechselbarer Energiespeicher für ein Kraftfahrzeug nach einem der zuvor genannten Ansprüche, wobei der Energiespeicher eine Angreifmöglichkeit umfasst, mit deren Hilfe er automatisiert ausgewechselt werden kann.

**8.** Auswechselbarer Energiespeicher für ein Kraftfahrzeug nach einem der zuvor genannten Ansprüche, wobei der Energiespeicher mit Hilfe von Führungsmitteln mehrdimensional definiert positionierbar ist.

**9.** Auswechselbarer Energiespeicher für ein Kraftfahrzeug, wobei der Energiespeicher von etwa 40KG bis zu etwa 400KG Gewicht aufweist, und / oder um die 100 Volt bis etwa 600 Volt bzw. bis zu 1000 Volt Spannung aufweist und / oder bis zu 100 KWh bereitstellt.

**10.** Auswechselmechanismus für einen auswechselbaren Energiespeicher eines Kraftfahrzeugs nach einem der zuvor genannten Ansprüche, umfassend eine Angreifstelle zum Lösen des Energieblocks.

**11.** Auswechselmechanismus für einen auswechselbaren Energiespeicher eines Kraftfahrzeugs Anspruch 10, wobei die Angreifstelle die Eichstelle der Interaktion zwischen Auswechselmechanismus und Kraftfahrzeug darstellt.

**12.** Auswechselmechanismus für einen auswechselbaren Energiespeicher eines Kraftfahrzeugs nach einem der Ansprüche 10 oder 11, wobei der Auswechselmechanismus das Kraftfahrzeug mit Hilfe der Angreifstelle haltert.

**13.** Auswechselmechanismus für einen auswechselbaren Energiespeicher eines Kraftfahrzeugs nach einem der zuvor genannten Ansprüche, wobei das Lösen des Energieblocks, die Aufnahme des Energieblocks auf der Aufnahmevorrichtung und der Austausch des aufgenommenen Energieblocks durch einen Ersatzenergieblock, sowie der Einbau des Ersatzenergieblocks in die Halterung des Kraftfahrzeugs automatisiert abläuft.

**14.** Austauschstation, umfassend eine Abstellmöglichkeit für Kraftfahrzeuge, einen Auswechselmechanismus nach einem der zuvor genannten Ansprüche, eine Vorrichtung zur Zu- und Abführung von Energiespeichern nach einem der zuvor genannten Ansprüche und/oder eine automatisierte Ausbau- Einbauvorrichtung für den Energiespeicher in dem Kraftfahrzeug nach einem der zuvor genannten Ansprüche, und/oder eine Steuerungsvorrichtung nach einem der zuvor genannten Ansprüche.

**15.** Verfahren zum Auswechseln von Energiespeichern in einem Kraftfahrzeug, umfassend ein Kraftfahrzeug mit einem Energiespeicher, eine Ab- und/oder Zuführung von Energiespeichern, eine Ausrichtvorrichtung zum Ausrichten von Kraftfahrzeugen zur Zuführvorrichtung, eine automatisierte Ausbau-Einbauvorrichtung zum zu- und abführen des Energiespeichers, **dadurch gekennzeichnet, daß** das Kraftfahrzeug mit Hilfe der Ausrichtvorrichtung relativ zur Zuführung von Energiespeichern definiert ausgerichtet wird und in einem weiteren Schritt nach der Ausrichtung der im Fahrzeug befindliche Energiespeicher durch die Ausbau- Einbauvorrichtung ausgebaut und abgeführt wird und in einem weiteren Schritt der neue Energiespeicher automatisiert zugeführt und in einem weiteren Schritt automatisch verriegelt wird, wobei die Automatisierung durch eine Steuerungsvorrichtung sichergestellt wird.
